(19) **Europäisches Patentamt**
**European Patent Office**
**Office européen des brevets**

(11) **EP 2 124 190 B1**

(12) **EUROPEAN PATENT SPECIFICATION**

(45) Date of publication and mention
of the grant of the patent:
**31.08.2011  Bulletin 2011/35**

(51) Int Cl.:
***G06T 5/00*** (2006.01)

(21) Application number: **08156448.6**

(22) Date of filing: **19.05.2008**

(54) **Image processing to enhance image sharpness**

Bildverarbeitung zur Verbesserung der Bildschärfe

Traitement d'image pour améliorer la netteté des images

(84) Designated Contracting States:
**DE FR GB**

(43) Date of publication of application:
**25.11.2009  Bulletin 2009/48**

(73) Proprietors:
• **Mitsubishi Electric Information Technology Centre**
**Europe B.V.**
**The Surrey Research Park**
**Guildford**
**Surrey GU2 7YD (GB)**
Designated Contracting States:
**GB**
• **Mitsubishi Electric Corporation**
**Tokyo, 100-8310 (JP)**
Designated Contracting States:
**DE FR**

(72) Inventors:
• **Sibiryakov, Alexander**
**Guildford, Surrey GU2 7YD (GB)**
• **Bober, Miroslaw**
**Guildford, Surrey GU2 7YD (GB)**

(74) Representative: **HOFFMANN EITLE**
**Patent- und Rechtsanwälte**
**Arabellastraße 4**
**81925 München (DE)**

(56) References cited:
**US-A1- 2004 047 514**

• **NARENDRA P M ET AL: "Real-time adaptive contrast enhancement" IEEE TRANSACTIONS ON PATTERN ANALYSIS AND MACHINE INTELLIGENCE USA, vol. PAMI-3, no. 6, November 1981 (1981-11), pages 655-661, XP008003619 ISSN: 0162-8828**
• **PAUL WYATT ET AL: "Fast Feature Extraction Using Approximations to Derivatives with Summed-Area Images" COMPUTER VISION - ACCV 2006 LECTURE NOTES IN COMPUTER SCIENCE;LNCS, SPRINGER-VERLAG, BE, vol. 3851, 1 January 2005 (2005-01-01), pages 776-786, XP019027409 ISBN: 978-3-540-31219-2**
• **BAY H ET AL: "Speeded-Up Robust Features (SURF)" COMPUTER VISION AND IMAGE UNDERSTANDING, ACADEMIC PRESS, US, vol. 110, no. 3, 15 December 2007 (2007-12-15), pages 346-359, XP022652944 ISSN: 1077-3142 [retrieved on 2007-12-15]**

EP 2 124 190 B1

**Description**

The present invention relates to the processing of images with blur to enhance the sharpness thereof.

Sharpening is one of the standard image processing techniques that are usually applied to visually enhance images. The effect of the sharpening usually appear very impressive to the users as it seems to bring out image details that were not there before. What sharpening actually does is to emphasize edges in the image and make them easier for the eye to pick out. No new details are created in the image.

The first step in sharpening an image is to blur it using one of many available prior art methods, e.g. pixel averaging, convolution with Gaussian mask or any other low-pass filtering. Next, the original image and the blurred version are processed so that if a pixel is brighter than the blurred version it is lightened further; if a pixel is darker than the blurred version, it is darkened. The result is to increase the contrast between each pixel and its neighbours. This process is usually called *Unsharp Masking* (UM) and can be represented by the following expression:

$$f_s(x,y) = f(x,y) + b( f(x,y) - f_{LP}(x,y) ) \qquad (1)$$

In (1), $f(x, y)$ is the original image, $f_{LP}(x, y)$ is its low-pass filtered version and $f_s(x,y)$ is the result of sharpening. The boosting factor b determines how much the image difference is amplified.

The expression (1) can also be generalized by replacing the difference $f(x,y)-f_{LP}(x,y)$ by a general high-pass filter $f_{HP}(x, y)$ :

$$f_s(x,y) = f(x,y) + b\, f_{HP}(x,y) \qquad (2)$$

The majority of prior art image sharpening methods use either form (1) or (2). The methods differ by the ways of choosing the boosting factor *b* and applying low-pass or high-pass filtering.

US patent 5,363,209 describes a variant of the UM method consisting of the following steps: 1) Converting the image to a luminance-chrominance format, wherein at least one signal represents overall image intensity; 2) Determining the maximum local contrast within the image; the local contrast is determined in 3x3-pixel neighbourhood; 3) Determining a 3x3 image filter, which increases maximum local contrast to a predetermined target value and all other contrast to an amount proportional thereto, and 4) Applying the determined filter function to the image to increase sharpness. Thus, in this method, $f_{LP}(x, y)$ is a 3x3 image average and *b* is a function depending on pixel position and image gradients: $b=b(x,y,f_x(x,y), f_y(x,y))$.

In the method described by Chiandussi and Ramponi in the paper entitled "Nonlinear Unsharp masking for the enhancement of Document Images", in the Proceedings of the Eighth European Signal Processing Conference, EUSIPCO-96, the structure of the UM method is maintained but a Laplacian-of-Gaussian (LoG) band-pass filter substitutes for the high-pass filter. The signal, which feeds the LoG filter, is processed by a quadratic operator which introduces a significant noise smoothing in uniform background areas. The overall structure of the algorithm corresponds to that of a homogeneous quadratic filter. The paper shows that quadratic filters are capable of edge enhancement in images with limited noise amplification.

US 2004/0047514 A1 discloses a method of sharpening a digital image having image pixels values includes the steps of: determining a $D_{min}$ value, representing a value corresponding to a minimum possible exposure for a system that produced the digital image; for each pixel value in the digital image providing a gain factor that is dependent on the difference between the pixel value and the $D_{min}$ value, such that pixel values nearer the $D_{min}$ value have smaller gain factors; and using the gain factors to sharpen the digital image.

Narendra P M et al: "Real-time adaptive contrast enhancement", IEEE Transactions on Pattern Analysis and Machine Intelligence USA, vol. PAMI-3, no. 6, November 1981 (1981-11), pages 655-661, XP008003619, ISSN: 0162-8828 discloses a recursive filter approach introduced to simplify real-time implementation of an adaptive contrast enhancement scheme for imaging sensors. With this scheme, even scenes possessing large global dynamic ranges (>40 dB) can be accommodated by the limited dynamic range (20 dB) of a display without losing the local contrast essential for image interpretation. The paper describes the recursive filter implementation of the local area contrast enhancement scheme using charge-coupled devices and the resultant real-time hardware capable of processing standard 525 and 875 line TV compatible video (from vidicons, videotape recorders, etc). Several examples from video imagery are included to demonstrate its effectiveness.

Paul Wyatt et al: "Fast Feature Extraction Using Approximations to Derivatives with Summed-Area Images", Computer Vision - ACCV 2006 Lecture Notes in Computer Science; LNCS, Springer-Verlag, BE, vol. 3851, 1 January 2005 (2005-01-01), pages 776-786, XP019027409, ISBN: 978-3-540-31219-2 discloses that accurate and stable identification of feature points is a requirement for such varied applications as wide-baseline stereo, object recognition and simultaneous localisation and mapping. Although a wide variety of feature extraction methods exist, certain aspects remain active areas of research. In the paper, a feature model is proposed which makes use of the summed area images in achieving scale invariance at the loss of theoretical rotational invariance. By making use of approximations to first and second derivatives, as well as the Laplacian, a wide variety of features may be obtained. Additionally, the stability of this method is increased by an improved approach to ordering of features. Evaluation is performed versus other common approaches using tests on precision, recall and information content of the extracted points.

BAY H ET AL: "Speeded-Up Robust Features (SURF)" COMPUTER VISION AND IMAGE UNDERSTANDING, ACADEMIC PRESS, US, vol. 110, no. 3, 15 December 2007 (2007-12-15), pages 346-359, XP022652944, ISSN: 1077-3142 [retrieved on 2007-12-15] section 3.1, discloses a scale- and rotation-invariant detector and descriptor, coined SURF (Speeded-Up Robust Features). SURF approximates or even outperforms previously proposed schemes with respect to repeatability, distinctiveness, and robustness, yet can be computed and compared much faster. This is achieved by relying on integral images for image convolutions; by building on the strengths of the leading existing detectors and descriptors (specifically, using a Hessian matrix-based measure for the detector, and a distribution-based descriptor); and by simplifying these methods to the essential. This leads to a combination of detection, description, and matching steps. The paper encompasses a detailed description of the detector and descriptor and then explores the effects of the most important parameters. The article concludes with SURF's application to two challenging, yet converse goals: camera calibration as a special case of image registration, and object recognition. The experiments underline SURF's usefulness in a broad range of topics in computer vision.

Many image sharpening and deblurring methods have been developed in last two decades. The most powerful methods perform blind deconvolution of images when the shape and size of the convolution kernel are unknown. Such algorithms are usually used in off-line processing, when the image that requires enhancement has already been captured and stored in a memory or a hard disk. In off-line mode, the requirements of processing speed and amount of memory are not critical.

A number of problems exist with known image sharpening and deblurring methods.

For example, a first problem is that modern image sensors require real-time performance of the image enhancement algorithms. Miniaturization and low price of the sensors significantly constrain image processors, while keeping high requirements on quality of the result.

A second problem is that capturing of a non-flat subject results in variable blur in the image of that subject; the blur amount depends on distance from the current position of the sensor to the subject. The amount of blur affects the size (that is, the aperture) of the sharpening filter that is required to sharpen the image.

Prior art methods handle this problem by performing the sharpening algorithm a plurality of times, each time using a different size filter aperture and then fusing the resulting images. However, this is not efficient from the points of view of memory consumption and speed of computation.

Furthermore, prior art techniques do not concentrate on optimization, and are not suitable for direct embedded implementation and/or very low-cost implementation.

According to the present invention, there is provided a method of processing image data to generate sharpened image data as set out in Claim 1.

The present invention also provides an apparatus for processing image data to generate sharpened image data as set out in Claim 7.

The present invention further provides a computer program product as set out in Claim 13.

According to an embodiment of the present invention, there is provided an apparatus and method for processing input image data to sharpen the image data. The input image data is converted to integral image data and a filter is applied to the integral image data to generate box-filtered image data.

This combination of integral image data and box filtering provides significant advantages in the computation time required to perform image sharpening.

The integral image data is processed using a filter with a size that changes for different parts of the image in accordance with the amount of blur in that part. In this way, the filter size can be matched to the amount of blur in each different part. Furthermore, the use of integral image data and box filtering in this case provides additional advantages because the number of processing operations required is constant, irrespective of the size of the filter that is used.

An embodiment of the present invention also provides a computer program product, such as a storage medium or a signal, carrying computer program instructions to program a programmable processing apparatus to become operable to perform a method as set out above or to become configured as an apparatus as set out above.

Embodiments of the present invention provide a number of further advantages. In particular:

- An embodiment reduces the complexity of elementary operations. More particularly, an embodiment uses only integer operations in fixed-point format and all divisions are replaced by bit shifts.

- An embodiment reduces the amount of the memory for storing intermediate results during image sharpening. A single buffer for storing a few image lines is sufficient for the proposed algorithm. Also, in-place processing is possible at no additional computational cost, when the output image is stored in the memory of the processed input image.

Embodiments of the invention can perform fast image sharpening, and are suitable for real-time implementation in a low-cost CPU embedded into linear image sensors.

Embodiments of the invention will now be described, by way of example only, with reference to the accompanying figures, in which:

Figure 1 schematically shows the components of an embodiment of the invention, together with the notional functional processing units into which the processing apparatus component may be thought of as being configured when programmed by computer program instructions;

Figure 2 shows the operations performed by the processing apparatus shown in Figure 1 to sharpen input image data; and

Figure 3 shows an illustrative representation of how data is stored within the apparatus of Figure 1 at various stages of the processing.

An embodiment will be described below in which processing is performed in an image scanner to sharpen the image data produced by a line sensor in the image scanner. It will be appreciated, however, that the processing may be performed in other types of apparatus, and that the processing may be performed on image data from other types of sensor, such as a full-image sensor.

As will be described below, the present embodiment uses a variable aperture of the sharpening filter depending on a locally estimated blur amount. The variable aperture is a function $r(x,y) \in [1.. r_{max}]$ available at any pixel $(x, y)$.

As a result, the filter aperture is selected at each pixel position in dependence upon the amount of blur in the image local to that pixel position. In this way, as the amount of blur in the image changes from one pixel position to another, the filter aperture size changes appropriately. This avoids the disadvantage of the prior art mentioned above which processes the whole image a plurality of times, each time using a filter with a different size aperture, and then fuses the results.

In addition, the embodiment produces the result progressively, as soon as new image lines are captured by the sensor. Thus, the embodiment requires a relatively small image processing buffer even in the case of the variable aperture of the filter. This is another difference from the prior art methods that usually work on an entire image requiring large intermediate memory for image processing.

Furthermore, the embodiment applies a filter to integral image data to generate box-filtered data, instead of applying a sharpening filter directly to intensity data. As a result, the number of processing operations required to perform the filtering operation remains constant, irrespective of the size of the filter aperture that is used to generate the box-filtered data.

Before describing the apparatus of the embodiment and the actual processing operations performed thereby, the processing algorithm employed in the embodiment will be described first.

In the image scanner of the present embodiment, the input image is a colour image consisting of three channels: R,G and B. In order to reduce computational load required for three channels, the embodiment process an intensity channel derived from the colour channels using a colour space transformation. Then, after image sharpening has been performed on the intensity channel, the three colour channels are reconstructed using the three original colour channels, the derived intensity channel before sharpening and the processed intensity channel after sharpening.

There are many conventional colour-to-intensity conversions that could be used to derive the intensity channel to be processed from the RGB channels. The present embodiment uses the simplified expression given by equation (3) because this requires only two additions:

$$f(x,y) \; = \; R(x,y) \; + \; G(x,y) \; + \; B(x,y) \qquad (3)$$

The low-pass filter included in the basic method (1) is replaced by a box filter $f_{BF}$, which is the sum of the pixels in a rectangular region $2r+1$ x $2r+1$. The box filter is computed independently of region size $r$ using a well-known integral image representation. The integral image *I(x,v)* is computed by recursive 2x2 filtering (that is, using four pixel references) as follows:

$$I(x,y) = f(x,y) + I(x-1,y) + I(x,y-1) - I(x-1,y-1) \qquad (4)$$

In the present embodiment, the variable aperture size $r=r(x,y)$ is determined in dependence upon the amount of blur in the neighbourhood of the pixel being processed, with the amount of blur being provided by the image scanner. The box filter $f_{BF}$ with variable aperture is computed using the integral image and only four memory references for any r, as follows:

$$f_{BF}(x,y,r) = I(x+r,y+r) - I(x-r-1,y+r) - I(x+r,y-r-1) + I(x-r-1,y-r-1) \quad (5)$$

where $r(x, y)$ is replaced by r for clarity.

The result of box filter (5) is used to obtain a "gain factor" $g(x,y)$, which determine a multiplicative change of colour components:

$$g(x,y) = k + L_r[f(x,y)] f_{BF}(x,y,r) \qquad (6)$$

where $k$ is a pre-computed numerical constant, depending on boosting factor in (1), $L_r[...]$ is a look-up-table pre-computed for each possible value $r(x, y) \in [1.. r_{max}]$ and each value of intensity. The amount of memory required by this look-up-table is usually small, because the range of intensity values in equation (3) is [0..765], assuming byte range of the input colour channels.

The gain factor given by equation (6) is used to modify the input colours in other to obtain the output colours in accordance with equation (7) below, which are the final result of the algorithm:

$$C_s(x,y) = g(x,y)C(x,y), \quad \text{where} \quad C = R, G, \text{ or } B \qquad (7)$$

One of the simplest methods of colour reconstruction based on processed intensity is the multiplicative method, in which the colour component value is assumed to be proportional to intensity. The present embodiment uses the multiplicative method of colour reconstruction, given by equations (8) and (9):

$$g(x,y) = \frac{f_s(x,y)}{f(x,y)} \qquad (8)$$

$$C_s(x,y) = g(x,y)C(x,y), \quad \text{where} \quad C = R, G, \text{ or } B \qquad (9)$$

where $R(x, y)$, $G(x,y)$, $B(x, y)$ and $f(x, y)$ are original colours and intensity and $R_s(x, y)$, $G_s(x, y)$, $B_s(x, y)$ and $f_s(x,y)$ are modified colours and intensity.

The present embodiment performs image sharpening, as indicated by the subscript "s". The UM sharpening procedure (1) discussed previously can be represented in an equivalent form given by equation (10) indicating that the result of sharpening is a linear combination of the original image and its low-pass filtered version.

$$f_s(x,y) = (1+b) \ f(x,y) \ - \ b \ f_{LP}(x,y) \qquad (10)$$

From equations (8) and (10) a new representation (11) of the gain factor $g(x, y)$ is:

$$g(x,y) = 1 + b - b\frac{f_{LP}(x,y)}{f(x,y)} \qquad (11)$$

As noted above, the present embodiment implements a general low-pass filter $f_{LP}$ as the box filter $f_{BF}$, which is the simplest variant of low-pass filtering. The box filter of variable size $r(x,y)$ is the pixel sum in a $(2r+1)$ x $(2r+1)$ rectangular region, given by

$$f_{BF}(x,y,r) = \sum_{i=-r}^{r}\sum_{j=-r}^{r} f(x+i,y+j) \qquad (12)$$

where $r(x,y)$ is replaced by $r$ for clarity. At each pixel, equation (12) requires $(2r+1)^2$ pixel references, which grows quadratically with an increase in the size of $r$.

In the present embodiment, the box filter uses a constant number of operations independently of the region size. This method is based on the representation of the image in the integral form $I(x,y)$:

$$I(x,y) = \sum_{a \leq x}\sum_{b \leq y} f(a,b) \qquad (13)$$

from which the sum in equation (12) can be replaced by four references to the integral image:

$$f_{BF}(x,y,r) = I(x+r,y+r) - I(x-r-1,y+r) - I(x+r,y-r-1) + I(x-r-1,y-r-1) \qquad (14)$$

where $r(x,y)$ is replaced by $r$ for clarity. Thus, the present embodiment reduces the complexity of the sharpening with a variable aperture to the complexity of a simple 2x2 filter.

The definition given by equation (13) can also be replaced by an equivalent recursive definition given by equation (15) below, that also requires only four references to the image buffers:

$$I(x,y) = f(x,y) + I(x-1,y) + I(x,y-1) - I(x-1,y-1) \qquad (15)$$

Using the box filter, the computation of the gain factor (11) is performed according to equation (16) below, where low-pass filter is replaced by a local image average:

$$g(x,y) = 1 + b - \frac{b}{(2r+1)^2} \frac{f_{BF}(x,y,r)}{f(x,y)} \qquad (16)$$

The floating-point gain factor given by equation (16) is not convenient for low-cost embedded implementation. Therefore, the present embodiment uses a fixed-point format with a precision of $p$ binary digits:

$$g_1(x,y) = 2^p \, g(x,y) \qquad (17)$$

For 32-bit integer representation, a large precision, e.g. $p=22$, can be used. In fixed-point representation the division operations in equation (16) can be performed in integer format. The present embodiment further reduces the complexity of the algorithm by excluding divisions from computations. More particularly, the present embodiment uses pre-computed look-up-tables $L_r[f(x,y)]$ for all possible values of the variable aperture $r \in [1..r_{max}]$ and intensity $f \in [0.. 765]$, assuming byte range of the input colour channels:

$$L_r[f] = -\frac{2^p b}{(2r+1)^2 f(x,y)} \qquad (18)$$

The final expression of the gain factor in fixed-point format is given by equation (19)

$$g(x,y) = k + L_r[f(x,y)] \, f_{BF}(x,y,r) \qquad (19)$$

where $k = 2^p(1+b)$ .

After applying the colour reconstruction defined by equation (9), the obtained colour components are also represented in the fixed-point format. To return to the original range, equation (9) is divided by $2^p$, which is efficiently implemented in the present embodiment by bit shifting to the right by p bits ('>>' operation in C/C++):

$$C_s(x,y) = g(x,y)C(x,y) >> p, \quad \text{where} \quad C = R, G, \text{ or } B \qquad (20)$$

Finally, the output values $C_s(x,y)$ are clipped in order to fit into the original range, e.g. [0..255].

The present embodiment reduces the amount of intermediate memory required to perform image sharpening.

More particularly, in the computational procedure given by equations (3)-(7) above, only the integral image given by equation (4) needs additional memory buffer; all other values, such as intensity $f(x,y)$, box filter $f_{BF}(x,y,r)$ and gain factor $g(x,y)$ are used immediately after computing them. From the analysis of equations (6) and (7) one can conclude that the gain factor $g(x,y)$ does not need storage for all pixels $(x,y)$; $g(x,y)$ can be stored in a local variable g, which is used to modify the colours given by equation (7) at the current pixel. Similarly, $f_{BF}(x,y,r)$ does not require any variable, as it can be directly substituted to equation (6). The intensity does not require a memory buffer due to simplicity of the equation (3); it can be recomputed in both the integral image given by equation (4) and the gain factor given by equation (6).

It will be seen from equation (14) that the box filter is not defined near the edges of the image, because pixel coordinates $(x \pm r, y \pm r)$ can be outside the image. The present embodiment therefore expands the image so that the computation of box filter defined by equation (14) can be performed correctly at the edges and corners of the integral image. The preferred embodiment uses simple pixel replication, which means that each pixel of the expanded image lying outside the original image has a value equal to that of the nearest pixel of the original, non-expanded image. This expansion is defined for the outside pixels as follows:

$$
\begin{aligned}
&1)\ f(-x,-y) = f(0,0), &&\text{for } 0 < x \le r_{max}+1,\ 0 < y \le r_{max}+1 \\
&2)\ f(x,-y) = f(x,0), &&\text{for } 0 \le x < M,\quad\ 0 < y \le r_{max}+1 \\
&3)\ f(M+x,-y) = f(M-1,0), &&\text{for } 0 < x \le r_{max},\quad 0 < y \le r_{max}+1 \\
&4)\ f(-x,y) = f(0,y), &&\text{for } 0 < x \le r_{max}+1,\ 0 \le y < N \\
&5)\ f(M+x,y) = f(M-1,y), &&\text{for } 0 < x \le r_{max},\quad 0 \le y < N \qquad (21) \\
&6)\ f(-x,N+y) = f(0,N-1), &&\text{for } 0 < x \le r_{max},\quad 0 < y \le r_{max} \\
&7)\ f(x,N+y) = f(x,N-1), &&\text{for } 0 \le x < M,\quad\ 0 < y \le r_{max} \\
&8)\ f(M+x,N+y) = f(M-1,N-1), &&\text{for } 0 < x \le r_{max},\quad 0 < y \le r_{max},
\end{aligned}
$$

where $M$ and $N$ are the width and height of the original image respectively.

Using the definitions in equation (21), the integral image defined by equation (15) is computed for all pixels from the extended range defined by equation (22) below.

$$
\begin{aligned}
x &\in [-r_{max},\ M + r_{max}-1] \\
y &\in [-r_{max},\ N + r_{max}-1] \qquad\qquad (22)
\end{aligned}
$$

After this, the box filter can be computed correctly for all pixels locations.

In order to sharpen one image line, the algorithm uses an image neighbourhood consisting of $2r_{max}+2$ lines (including the current line, $r_{max}+1$ previous lines and $r_{max}$ next lines). This neighbourhood is used in the box filter defined by equation (5). Thus, the internal memory buffers should have a capacity to store pixel values for at least $N_r \times d$ pixels, where $N_r$ is the expanded image width $N$ so that $Nr=N+2r_{max}+1$ and $d_{max}=2r_{max}+2$ is the neighbourhood size used in the sharpening filter. At the initial stage, the algorithm processes $r_{max}$ lines of the original image and fills the internal buffer with the intermediate result of processing, which is the integral image $I$. When a new line with number $i=r_{max}+1$, $r_{max}+2,...,$ $M$ is received from the scanner, the algorithm updates the internal buffer with the new line of the integral image $I$, and performs the sharpening algorithm for the line with number $i-r_{max}$. At the final stage, when all M lines of the image are scanned, and $M-r_{max}$ lines are sharpened, the algorithm performs sharpening of the remaining $r_{max}$ lines.

Having provided a summary of the algorithm employed in the present embodiment, the apparatus of the embodiment and the processing operations performed thereby will now be described.

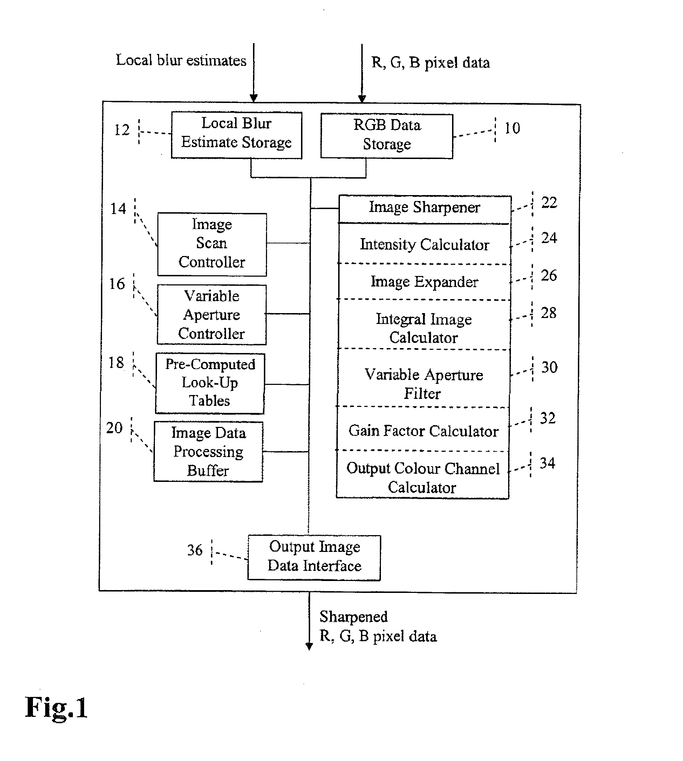

Referring to Figure 1, an embodiment of the invention comprises a programmable processing apparatus 2, containing, in a conventional manner, one or more processors, memories, graphics cards etc.

The processing apparatus 2 is programmed to operate in accordance with programming instructions input, for example, as data stored on a data storage medium (such as an optical CD Rom 4, semiconductor ROM, magnetic recording medium 6, etc), and/or as a signal 8 (for example an electrical or optical signal input to the processing apparatus 2, for example from a remote database, by transmission over a communication network such as the Internet, or by transmission through the atmosphere).

When programmed by the programming instructions, processing apparatus 2 can be thought of as being configured as a number of functional units for performing processing operations. Examples of such functional units and their interconnections are shown in Figure 1. The units and interconnections illustrated in FIG.1 are, however, notional, and are shown for illustration purpose only to assist understanding; they do not necessarily represent units and connections into which the processor, memory etc of the processing apparatus 2 actually become configured.

Referring to the functional units shown in Figure 1, the RGB data storage section 10 is configured to receive and store input image data from the line sensor of the scanner (not shown), in the form of red, green and blue intensity values for each pixel. As noted above, this data is received in three channels, namely a red, green and blue channel. In the present embodiment, the RGB data storage section 10 is also configured to store sharpened image data generated by the process apparatus 2, prior to output. This avoids the need for an additional memory to store the sharpened image data.

The local blur estimate storage section 12 is configured to receive and store an estimate of the local blur for each pixel of the image from the image scanner.

The image scan controller 14 is configured to control the flow of data to and from the RGB data storage section 10 during processing. In use of the apparatus, the image scan controller 14 determines, inter alia, which pixel to process next.

The variable aperture controller 16 is configured to control the size of the aperture of the filter employed to process each pixel in the input image data, in dependence upon the estimate of local blur stored for the pixel in the local blur estimate storage section 12.

The pre-computed look-up tables 18 store pre-computed values of the variable $L_f[f]$ in equation (18) as function of image data intensity and filter aperture size. During the sharpening process, the pre-computed look-up tables are addressed using calculated values of image data intensity and filter aperture size to output a value of said variable without the need to evaluate equation (18), which includes computationally costly division calculations. Accordingly, the pre-computed look-up tables 18 remove the need to carry out division operations during the image sharpening process, thereby reducing processing requirements and speeding up processing.

The image data processing buffer 20 is configured to store the intermediate results produced during the image sharpening process, such as the integral data generated in accordance with equation (19) above.

The image sharpener 22 is configured to process image data, received from the RGB data storage section 10, to provide sharpened image data.

In the present embodiment, the image sharpener 22 comprises:

- an intensity calculator 24 for calculating a single intensity channel from the input image data stored in the RGB data storage section 10;

- an image expander 26 for generating an expanded image based on the input image prior to processing so as to reduce unwanted edge effects in the resulting sharpened image data;

- an integral image calculator 28 for generating integral image data from the expanded image generated by the image expander 26, and providing the same to the image data processing buffer 20;

- a variable aperture filter 30 for processing integral image data provided by image data processing buffer 20, to generate filtered image data;

- a gain factor calculator 32 for determining a gain factor based on the product of the filtered image data provided by the variable aperture filter 30 and the output of the pre-computed look-up tables 18; and

- an output colour channel calculator 34 for modulating the input image data stored in the RGB data storage section 10 by the gain factor determined by the gain factor calculator 32.

The output image data interface 36 is configured to communicate sharpened RGB pixel data, stored in the RGB data storage section 10, to a further component of the scanner or an external device.

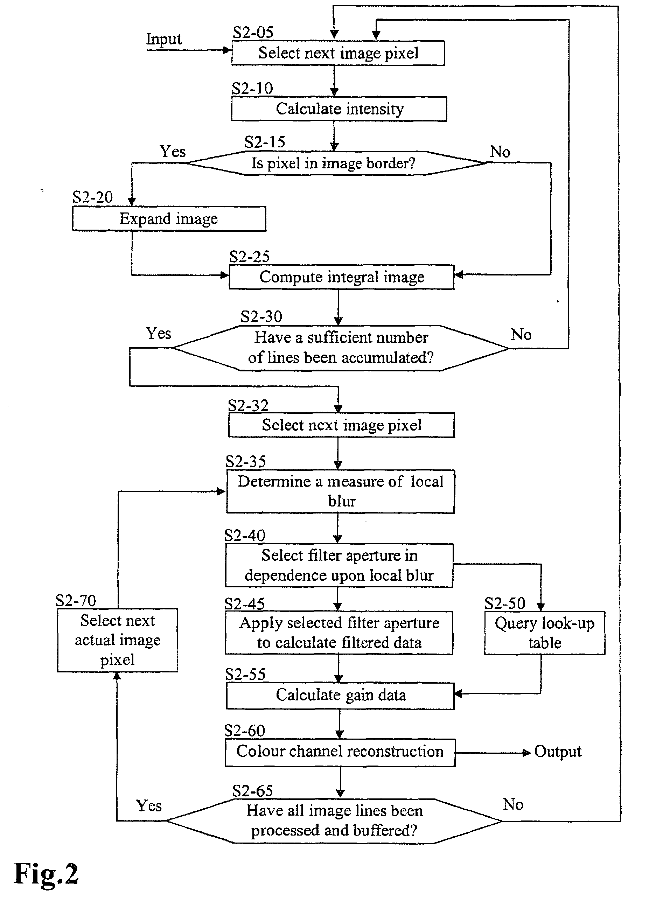

Figure 2 shows the processing operations performed by processing apparatus 2 to process input data in this embodiment.

Referring to Figure 2, in step S2-05, the image scan controller 14 selects the first (if the process has just been initiated) or the next image pixel. The RGB data storage section 10 then provides data for the selected pixel in each of the three colour channels to the image sharpener 22.

In step S2-10, intensity calculator 24 processes the RGB data from the RGB data storage section 10 to a generate a single intensity channel.

There exist many luminance-chrominance colour spaces, such as HSV, YCrCb, L*u*v*, L*a*b*, providing an intensity or luminance channel. All these colour spaces differ by the number of operations required to compute the intensity $f$ from the colour components R,G and B. The present embodiment generates the intensity channel using the simplest intensity representation given by equation (3) above in integer format, thereby requiring by only two additions. However, any other more complex transformation of the colour to intensity $f(x,y) = f(R(x,y),G(x,y),B(x,y))$ can be used instead.

The result of the processing at step S2-10 is a single channel of data on which image sharpening is to be performed. This avoids the need to perform image sharpening of each of the R, G and B channels, thereby reducing processing requirements and/or time.

As noted previously, in order to avoid unwanted effects at the borders of the resulting sharpened image, it is necessary to extend the image prior to processing. Accordingly, in step S2-15, the image scan controller 14 determines whether the current pixel is located in a border of the input image which, in the present embodiment, has a depth of one pixel.

If the current pixel does lie in a border, then the image sharpener 22 carries out image expansion in step S2-20 using the image expander 26. This image expansion is performed in accordance with equation (21) above, producing intensity data for the expanded regions of the image, which is stored in the image data processing buffer 20.

Following image expansion, or if the current pixel is not a border pixel, integral image calculator 28 processes the intensity data to calculate integral image date in step S2-25. This processing is performed in accordance with equation (15) above.

In step S2-30, image scan controller 14 checks the number of lines of data that are stored in the image data processing buffer 20. More particularly, because the variable aperture filtering requires data from a neighbourhood centred on the currently selected pixel, it is only after a sufficient number of lines have been accumulated in the image data processing buffer 20, that the variable aperture filtering can commence. Accordingly, in step S2-30, the image scan controller 14 determines if a sufficient number of lines (comprising $2r_{max} + 2$ lines) have been accumulated in the image data processing buffer 20.

If a sufficient number of lines have not been accumulated, processing returns to step S2-05 and the processing at steps S2-05 to S2-30 described above is repeated until a sufficient number of lines have been accumulated in the image data processing buffer 20.

When a sufficient number of lines have been accumulated in the image data processing buffer 20, then the processing proceeds to step S2-32.

At step S2-32, the image scan controller 14 selects the next input image pixel for which sharpened image data has not yet been calculated.

In step S2-35, the variable aperture controller 16 determines a measure of the local image blur corresponding to the selected image pixel. In the present embodiment this is done by reading the estimated blur provided by the scanner and stored in the local blur estimate storage section 12 for the current pixel. One way in which the scanner may provide the local blur estimate is described in our co-pending European patent application published as EP 2124429 entitled "Document Scanner". However, if the processing apparatus 2 is employed within an apparatus which does not provide an estimate of blur, or if the processing apparatus 2 is a stand-alone apparatus, then the variable aperture controller 16 may itself perform processing to calculate a blur measure using a conventional technique, such as one of those described in US 5,363,209.

In step S2-40, the variable aperture controller 16 selects an aperture for the filter to be applied to the integral image data in dependence upon the estimate of local blur determined at step S2-35. It will be appreciated that the method of selecting the size of the filter aperture is dependent upon the method used to measure the local blur and hence the values that the local blur will take. In the present embodiment, data is stored defining a respective aperture size for each range of the blur values produced for typical input images by the scanner. This stored data is generated in advance by testing images to determine the typical blur values thereof and assigning filter apertures to different ranges of these values. The maximum aperture size $r_{max}$ is also assigned in this way.

In step S2-45, a filter with an aperture of the size selected in step S2-40 is applied to the integral image data to generate box-filtered image data in accordance with equation (14) above. The effect of this processing is the same as applying the box filter directly to the intensity data in accordance with equation (12) above. However, by applying the filter to the integral image data, a filtered value of the intensity data is obtained using a constant number of processing operations, irrespective of the size of the filter aperture. More particularly, the filtered image data is obtained with a number of processing operations equivalent to those required for a filter of size 2x2, as described previously.

In step S2-50, the size of the filter aperture selected in step S2-40 is used as one of two input values to query the pre-computed look-up tables 18. The other input value is the intensity of the image data for the current pixel. This was computed previously at step S2-10. However, in order to reduce memory requirements, the value computed at step S2-10 is not stored in the present embodiment, and instead it is recalculated at step S2-50 by processing the RGB data stored in the RGB data storage section 10 in the same way as at step S2-10.

As noted above, the use of the pre-computed look-up tables 18 is this way enables a value of $L_r[f]$ in equation (18) above to be computed without computationally expensive division calculations.

In step S2-55, the gain factor calculator 32 calculates a value for the gain "g" in accordance with equation (6) above using the value $L_r[f]$ read from the look-up tables 18 at step S2-50 and the filtered data produced at step S2-45.

In step S2-60, the output colour channel calculator 34 modulates the RGB data for the current pixel stored in the RGB data storage section 10 by the gain "g" calculated at step S2-55 to generate sharpened RGB data for the current pixel in accordance with equation (7) above. The sharpened RGB data values are then written back into the RGB data storage section 10, overwriting the original RGB values for the current pixel, pending output from the processing apparatus 2.

In step S2-65, the image scan controller 14 determines whether all of the lines of the input image have been converted to integral image data and buffered in the processing at steps S2-05 to S2-30.

If it is determined that not all of the lines of the input image have been processed in this way, then the processing returns to step S2-05, and the processing described above is repeated.

On the other hand, when it is determined that all of the lines of the input image have been converted to integral image data and buffered, then processing returns to step S2-35 via step S2-70 (at which the next pixel to be processed is selected). Steps S2-35 to S2-60 are then repeated in this way for each pixel that has not yet been processed to calculate a corresponding gain factor.

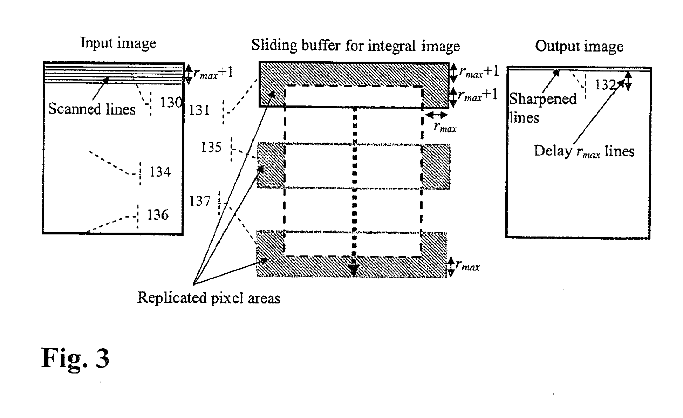

Figure 3 shows schematically the storage of data during the processing operations described above. More particularly, Figure 3 shows the storage of RGB data for the input image in RGB data storage unit 10, the storage of the integral image data (generated in step S2-25) in the image data processing buffer 20, and the storage of the sharpened image data (generated at step S2-60) in the RGB data storage section 10.

Referring to Figure 3, the effect of the processing at steps S2-05 to S2-30 to accumulate integral image data in the image data processing buffer 20 is represented as a "sliding buffer". More particularly, the position of the sliding buffer in Figure 3 schematically represents the different parts of the integral image for which data is stored in the image data processing buffer 20.

When the first line 30 of the input image is scanned, the sliding buffer has position 131. The first line is replicated in the buffer according to the first five rules in equation (21). During scanning of the next $r_{max}$-1 lines, the sliding buffer remains in the position 131 and pixels are replicated according to rules (4) and (5) in equation (21). As a result of this processing, replicated pixel values are generated in the shaded region shown in Figure 3 at position 131.

After the first $r_{max}$ lines have been scanned, the integral image data in the sliding buffer is ready for the processing at steps S2-35 to S2-65 to apply the box filter and produce the first line 133 of the sharpened image data. Thus, a delay of $r_{max}$ lines is created between the scanning of the RGB input mage data and the generation of the sharpened RGB data.

During subsequent scanning 134, the sliding buffer is moved to a new position 135. This is implemented by a cyclic shift of the pointers to the buffer's lines. In the new position 135, rules (4) and (5) from equation (21) are applied to replicate pixels in the shaded areas of position 135 shown in Figure 3.

At the final line 136 of the input image, the sliding buffer is in position 137, and rules (4) - (8) from equation (21) are applied to replicate the pixels.

During this scanning, there is always a delay of $r_{max}$ lines between the input and output lines, which makes it possible to use the in-place processing described above, in which the sharpened image data for the output line is written directly to RGB data storage section 10 to replace the data of the input line.

<u>Modifications and variations</u>

Many modifications and variations can be made to the embodiment described above.

For example in the embodiment above, the processing apparatus 2 forms part of an image scanner. However, instead, the processing apparatus 2 may be a stand-alone apparatus, such as a personal computer, or it may form part of a different type of apparatus, such as a digital camera, copier or printer.

Although the embodiment described above processes image data from a linear image sensor, the method of processing images disclosed hereinabove is equally applicable to image data captured using a rectangular array of image sensors, such as a CCD camera.

The embodiment described above performs in-place processing to write the sharpened image data back into the RGB data storage section 10 overwriting the original RGB data of the input image. However, instead, a different memory may be provided to store the sharpened image data.

Although embodiments of the invention have been described above with reference to an input image represented as three colour channels with a range of intensity values of 0 to 255, it would be obvious to the skilled person that embodiments of the invention may be provided, which process an input image represented using any number of channels with any range of intensity values.

Although the embodiment above is configured to process colour input data, it may instead be configured to process black and white input data. In this case, the intensity calculator 22 would no longer be required because a single channel of intensity data of the black and white data would already be available for processing.

In the embodiment described above, processing is performed by a programmable processing apparatus using processing routines defined by computer program instructions. However, some, or all, of the processing could be performed using hardware instead.

Other modifications are, of course, possible.

**Claims**

**1.** A method of processing image data to generate sharpened image data, the method comprising:

processing image data to generate integral image data (S2-25) in accordance with the equation:

$$I(x,y) = f(x,y) + I(x-1,y) + I(x,y-1) - I(x-1,y-1)$$

where I is the value of the integral image data, x, y are pixel coordinates, and f is an intensity value;

applying a filter to the integral image data to generate box-filtered image data (S2-40, S2-45), wherein the process of applying a filter to the integral image data comprises, for each of a plurality of pixel positions within the image data:

selecting a size of the filter to be applied in dependence upon a measure of the image blur for that pixel position (S2-40); and

applying the filter of the selected size to the integral image data to generate box-filtered image data (S2-45);

calculating a gain factor in dependence upon the box-filtered image data (S2-55); and

modulating the image data in dependence upon the calculated gain factor to generate sharpened image data (S2-60);

wherein:

the filter is applied to the integral image data to generate box-filtered image data in accordance with the equation:

$$f_{BF}(x,y,r) = I(x+r,y+r) - I(x-r-1,y+r) - I(x+r,y-r-1) + I(x-r-1,y-r-1)$$

where r is the filter size for the pixel and $f_{BF}$ is the value of the box-filtered image data.

2. A method according to Claim 1, wherein:

the sharpened image data is generated by modulating the image data in accordance with the equation:

.

$$f_s(x,y) = g(x,y)f(x,y)$$

where x,y are pixel coordinates, $f_s$ is an intensity value of the sharpened image data, $g$ is the gain factor and $f$ is an intensity value of the image data.

3. A method according to Claim 1 or Claim 2, wherein the process of calculating a gain factor (S2-55) comprises, for each of a plurality of pixel positions within the image data:

reading a stored value from a look-up table in dependence upon both the size of the filter applied to the integral image data for that pixel position and an intensity of the image data for that pixel position (S2-50); and

calculating the gain factor as a function of the value read from the look-up table and the generated box-filtered image data for that pixel position.

4. A method according to any preceding claim, wherein:

the integral image data is accumulated in a memory for pixels on a number of lines of the image, wherein the number of lines is dependent upon the size of the filter to be applied (S2-25, S2-30); and

the processes of applying the filter (S2-45), calculating the gain factor (S2-55) and modulating the image data (S2-60) are carried out for pixels on a stored line before integral image data for pixels on a further line of the image is stored in the memory and the processes are repeated for pixels on the next stored line.

5. A method according to any preceding claim, wherein the image data to be sharpened is stored in a memory and overwritten in the memory with the sharpened image data as the sharpened image data is generated.

6. A method according to any preceding claim, wherein:

   the image data to be sharpened comprises colour data in a plurality of channels;
   the colour data is processed to generate intensity data (S2-10);
   the generated intensity data is processed to generate the integral image data (S2-25); and
   the colour data in the plurality of channels is modulated in dependence upon the calculated gain factor to generate the sharpened image data (S2-60).

7. Apparatus for processing image data to generate sharpened image data, the apparatus comprising:

   means (28) for processing image data to generate integral image data in accordance with the equation:

$$I(x,y) = f(x,y) + I(x-1,y) + I(x,y-1) - I(x-1,y-1)$$

   where I is the value of the integral image data, x,y are pixel coordinates, and f is an intensity value;
   means (30) for applying a filter to the integral image data to generate box-filtered image data, wherein the means (30) for applying a filter to the integral image data is arranged to apply the filter, for each of a plurality of pixel positions within the image data, by:

   selecting a size of the filter to be applied in dependence upon a measure of the image blur for that pixel position; and
   applying the filter of the selected size to the integral image data to generate box-filtered image data;

   means (32) for calculating a gain factor in dependence upon the box-filtered image data; and means (34) for modulating the image data in dependence upon the calculated gain factor to generate sharpened image data; wherein:
   the means (30) for applying a filter to the integral image data is arranged to apply the filter to the integral image data to generate box-filtered image data in accordance with the equation:

$$f_{BF}(x,y,r) = I(x+r,y+r) - I(x-r-1,y+r) - I(x+r,y-r-1) + I(x-r-1,y-r-1)$$

   where r is the filter size for the pixel and $f_{BF}$ is the value of the box-filtered image data.

8. Apparatus according to Claim 7, wherein the means (34) for modulating the image data to generate sharpened image data is arranged to modulate the image data in accordance with the equation:

$$f_s(x,y) = g(x,y)f(x,y)$$

   where $x,y$ are pixel coordinates, $f_s$ is an intensity value of the sharpened image data, $g$ is the gain factor and $f$ is an intensity value of the image data.

9. Apparatus according to Claim 7 or Claim 8, wherein the means (32) for calculating a gain factor is arranged to calculate a respective gain factor for each of a plurality of pixel positions within the image data by:

   reading a stored value from a look-up table (18) in dependence upon both the size of the filter applied to the integral image data for that pixel position and an intensity of the image data for that pixel position; and
   calculating the gain factor as a function of the value read from the look-up table (18) and the generated box-filtered image data for that pixel position.

**10.** Apparatus according to any of Claims 7 to 9, wherein the apparatus is arranged to:

accumulate the integral image data in a memory (20) for pixels on a number of lines of the image, wherein the number of lines is dependent upon the size of the filter to be applied; and

apply the filter, calculate the gain factor and modulate the image data for pixels on a stored line before storing integral image data for pixels on a further line of the image in the memory and repeating the processes for pixels on the next stored line.

**11.** Apparatus according to any of Claims 7 to 10, wherein the apparatus is arranged to store the image data to be sharpened in a memory (10) and overwrite the stored image data in the memory (10) with the sharpened image data as the sharpened image data is generated.

**12.** Apparatus according to any of Claims 7 to 11, wherein:

the image data to be sharpened comprises colour data in a plurality of channels;
the apparatus further comprises means (24) for processing colour image data in a plurality of channels to generate intensity data from the colour image data;
the means (28) for processing image data to generate integral image data is operable to process the intensity data to generate the integral image data; and
the means (34) for modulating the image data is operable to modulate the colour data in the plurality of channels in dependence upon the calculated gain factor to generate the sharpened image data.

**13.** A computer program product carrying computer program instructions to program a programmable processing apparatus to become operable to perform a method as set out in at least one of Claims 1 to 6.

**Patentansprüche**

**1.** Verfahren zum Verarbeiten von Bilddaten zum Erzeugen geschärfter Bilddaten, wobei das Verfahren umfasst:

Verarbeiten von Bilddaten, um integrale Bilddaten zu erzeugen (S2-25), anhand der Gleichung:

$$I(x,y) = f(x,y) + I(x-1,y) + I(x,y-1) - I(x-1,y-1)$$

wobei I der Wert der integralen Bilddaten ist, x, y, Pixelkoordinaten sind und f ein Intensitätswert ist;
Anwenden eines Filters auf die integralen Bilddaten, um Box-gefilterte Bilddaten zu erzeugen (S2-40, S2-45), wobei der Prozess des Anwendens eines Filters auf die integralen Bilddaten für jede einer Mehrzahl von Pixelpositionen innerhalb der Bilddaten umfasst:

Auswählen einer Größe des anzuwendenden Filters in Abhängigkeit von einer Messung der Bildunschärfe für diese Pixelposition (S2-40); und
Anwenden des Filters der ausgewählten Größe auf die integralen Bilddaten, um Box-gefilterte Bilddaten zu erzeugen (S2-45);
Berechnen eines Verstärkungsfaktors in Abhängigkeit von den Box-gefilterten Bilddaten (S2-55); und
Modulieren der Bilddaten in Abhängigkeit vom berechneten Verstärkungsfaktor, um geschärfte Bilddaten (S2-60) zu erzeugen;
wobei:

der Filter auf die integralen Bilddaten angewendet wird, um Box-gefilterte Bilddaten anhand der Gleichung:

$$f_{BF}(x, y, r) = I(x + r, y + r) - I(x - r - 1, y + r) - I(x + r, y - r - 1) + I(x - r - 1, y - r - 1)$$

zu erzeugen, wobei r die Filtergröße für das Pixel ist und $f_{BF}$ der Wert der Box-gefilterten Bilddaten ist.

**2.** Verfahren gemäß Anspruch 1, wobei:

die geschärften Bilddaten durch Modulieren der Bilddaten anhand der Gleichung:

$$f_s(x, y) = g(x, y) f(x, y)$$

erzeugt werden, wobei x,y Pixelkoordinaten sind, $f_s$ ein Intensitätswert der geschärften Bilddaten ist, g der Verstärkungsfaktor ist und f ein Intensitätswert der Bilddaten ist.

**3.** Verfahren gemäß Anspruch 1 oder Anspruch 2, wobei der Prozess des Berechnens eines Verstärkungsfaktors (S2-55) für jede der Mehrzahl von Pixelpositionen innerhalb der Bilddaten umfasst:

Einlesen eines gespeicherten Wertes aus einer Nachschlagtabelle in Abhängigkeit von sowohl der Größe des auf die integralen Bilddaten für diese Pixelposition angewendeten Filters als auch einer Intensität der Bilddaten für diese Pixelposition (S2-50); und Berechnen des Verstärkungsfaktors als eine Funktion des aus der Nachschlagtabelle ausgelesenen Werts und der erzeugten Box-gefilterten Bilddaten für diese Pixelposition.

**4.** Verfahren gemäß einem der vorstehenden Ansprüche, wobei:

die integralen Bilddaten in einem Speicher für Pixel zu einer Anzahl von Zeilen des Bildes akkumuliert werden, wobei die Anzahl von Zeilen abhängig ist von der Größe des anzuwendenden Filters (S2-25, S2-30); und die Prozesse des Anwendens des Filters (S2-45), Berechnens des Verstärkungsfaktors (S2-55) und Modulierens der Bilddaten (S2-60) für Pixels auf einer gespeicherten Zeile ausgeführt werden, bevor integrale Bilddaten für Pixel auf einer weiteren Zeile des Bildes im Speicher gespeichert werden und die Prozesse für Pixel an der nächsten gespeicherten Zeile wiederholt werden.

**5.** Verfahren gemäß einem der vorstehenden Ansprüche, wobei die zu schärfenden Bilddaten in einem Speicher gespeichert werden und mit den geschärften Bilddaten überschrieben werden, während die geschärften Bilddaten erzeugt werden.

**6.** Verfahren gemäß einem der vorstehenden Ansprüche, wobei:

die zu schärfenden Bilddaten Farbdaten in einer Mehrzahl von Kanälen umfassen; die Farbdaten prozessiert werden, um Intensitätsdaten zu erzeugen (S2-10); die erzeugten Intensitätsdaten prozessiert werden, um die integralen Bilddaten zu erzeugen (S2-25); und die Farbdaten in der Mehrzahl von Kanälen moduliert werden, in Abhängigkeit von dem berechneten Verstärkungsfaktor, um die geschärften Bilddaten zu erzeugen (S2-60).

**7.** Vorrichtung zum Verarbeitung von Bilddaten, um geschärfte Bilddaten zu erzeugen, wobei die Vorrichtung umfasst:

ein Mittel (28) zum Verarbeiten von Bilddaten, um integrale Bilddaten zu erzeugen, anhand der Gleichung:

$I(x, y) = f(x, y) + I(x-1, y) + I(x, y-1) - I(x-1, y-1)$

wobei I der Wert der integralen Bilddaten ist, x, y, Pixelkoordinaten sind und f ein Intensitätswert ist; ein Mittel (30) zum Anwenden eines Filters auf die integralen Bilddaten, um Box-gefilterte Bilddaten zu erzeugen, wobei das Mittel (30) zum Anwenden eines Filters auf die integralen Bilddaten dafür ausgelegt ist, den Filter für jede einer Mehrzahl von Pixelpositionen innerhalb der Bilddaten anzuwenden, durch:

Auswählen einer Größe des anzuwendenden Filters in Abhängigkeit von einer Messung der Bildunschärfe für diese Pixelposition; und
Anwenden des Filters der ausgewählten Größe auf die integralen Bilddaten, um Box-gefilterte Bilddaten zu erzeugen;
ein Mittel (32) zum Berechnen eines
Verstärkungsfaktors in Abhängigkeit von den Box-gefilterten Bilddaten; und
ein Mittel (34) zum Modulieren der Bilddaten in Abhängigkeit vom berechneten Verstärkungsfaktor, um geschärfte Bilddaten zu erzeugen;
wobei:

das Mittel (30) zum Anwenden eines Filters auf die integralen Bilddaten ausgelegt ist, den Filter auf die integralen Bildaten anzuwenden, um Box-gefilterte Bilddaten anhand der Gleichung:

$$f_{BF}(x, y, r) = I(x+r, y+r) - I(x-r-1, y+r) - I(x+r, y-r-1) + I(x-r-1, y-r-1)$$

zu erzeugen, wobei r die Filtergröße für das Pixel ist und $f_{BF}$ der Wert der Box-gefilterten Bilddaten ist.

8. Vorrichtung gemäß Anspruch 7, wobei das Mittel (34) zum Modulieren der Bilddaten zum Erzeugen geschärfter Bilddaten dafür ausgelegt ist, die Bilddaten gemäß der Gleichung zu modulieren:

$$f_s(x, y) = g(x, y) f(x, y)$$

wobei x,y Pixelkoordinaten sind, $f_s$ ein Intensitätswert der geschärften Bilddaten ist, g der Verstärkungsfaktor ist und f ein Intensitätswert der Bilddaten ist.

9. Vorrichtung gemäß Anspruch 7 oder Anspruch 8, wobei das Mittel (32) zum Berechnen eines Verstärkungsfaktors dafür ausgelegt ist, einen entsprechenden Verstärkungsfaktor für jede einer Mehrzahl von Pixelpositionen innerhalb der Bilddaten zu berechnen durch:

Einlesen eines gespeicherten Wertes aus einer Nachschlagtabelle (18) in Abhängigkeit von sowohl der Größe des auf die integralen Bilddaten für diese Pixelposition angewendeten Filters als auch einer Intensität der Bilddaten für diese Pixelposition; und
Berechnen des Verstärkungsfaktors als eine Funktion des aus der Nachschlagtabelle (18) ausgelesenen Werts und der erzeugten Box-gefilterten Bilddaten für diese Pixelposition.

10. Vorrichtung gemäß einem der Ansprüche 7 bis 9, wobei die Vorrichtung ausgelegt ist zum:

Akkumulieren der integralen Bilddaten in einem Speicher (20) für Pixel einer Anzahl von Zeilen des Bildes, wobei die Anzahl von Zeilen abhängig von der Größe des anzuwendenden Filters ist; und
Anwenden des Filters, um den Verstärkungsfaktor zu berechnen und die Bilddaten für Pixel auf einer gespeicherten Zeile zu modulieren, bevor integrale Bilddaten für Pixel auf einer weiteren Zeile des Bildes im Speicher gespeichert werden und die Prozesse für Pixel an der nächsten gespeicherten Zeile wiederholt werden.

11. Vorrichtung gemäß einem der Ansprüche 7 bis 10, wobei die Vorrichtung dafür ausgelegt ist, die zu schärfenden Bilddaten in einem Speicher (10) zu speichern und die gespeicherten Bilddaten in dem Speicher (10) mit den geschärften Bilddaten zu überschreiben, wenn die geschärften Bilddaten erzeugt werden.

12. Vorrichtung gemäß einem der Ansprüche 7 bis 11, wobei:

die zu schärfenden Bilddaten Farbdaten in einer Mehrzahl von Kanälen umfassen:

die Vorrichtung weiter Mittel (24) zum Verarbeiten von Farbbilddaten in einer Mehrzahl von Kanälen umfasst, um Intensitätsdaten aus den Farbbilddaten zu erzeugen;

das Mittel (28) zum Verarbeiten von Bilddaten zum Erzeugen von integralen Bilddaten betreibbar ist, die Intensitätsdaten zu verarbeiten, um die integralen Bilddaten zu erzeugen; und

das Mittel (34) zum Modulieren der Bilddaten betreibbar ist, die Farbdaten in der Mehrzahl von Kanälen in Abhängigkeit vom berechneten Verstärkungsfaktor zu modulieren, um die geschärften Bilddaten zu erzeugen.

**13.** Computerprogrammprodukt, das Computerprogrammanweisungen trägt, um eine programmierbare Verarbeitungsvorrichtung zu programmieren, betreibbar zu werden, ein Verfahren wie in zumindest einem der Ansprüche 1 bis 6 dargelegt, durchzuführen.

**Revendications**

**1.** Procédé de traitement de données d'image pour générer des données d'image plus nettes, le procédé comprenant :

le traitement de données d'image pour générer des données d'image intégrées (S2-25) selon l'équation :

$$I(x,y) = f(x, y) + I(x-1, y) + I(x, y-1) - I(x-1,y-1)$$

où I est la valeur des données d'image intégrées, $x, y$ sont des coordonnées de pixel, et f est une valeur d'intensité ;

l'application d'un filtre aux données d'image intégrées pour générer des données d'image lissées (S2-40, S2-45), où le processus d'application d'un filtre aux données d'image intégrées comprend, pour chacune d'une pluralité de positions de pixel dans les données d'image :

la sélection d'une taille du filtre à appliquer en fonction d'une mesure du flou d'une image pour cette position de pixel (S2-40) ; et

l'application du filtre de la taille sélectionnée aux données d'image intégrées pour générer des données d'image lissées (S2-45) ;

le calcul d'un facteur de gain en fonction des données d'image lissées (S2-55) ; et

la modulation des données d'image en fonction du facteur de gain calculé pour générer des données d'image plus nettes (S2-60) ; où :

le filtre est appliqué aux données d'image intégrées pour générer des données d'image lissées selon l'équation :

$$f_{BF}(x,y,r) = I(x + r,y+r) - I(x-r-1,y+r) - I(x + r, y-r-1) + I(x-r-1,y-r-1)$$

où r est la taille de filtre pour le pixel et $f_{BF}$ est la valeur des données d'image lissées.

**2.** Procédé selon la revendication 1, dans lequel :

les données d'image plus nettes sont générées par modulation des données d'image selon l'équation :

$$f_s(x,y) = g(x, y) \, f(x, y)$$

où $x, y$ sont des coordonnées de pixel, $f_s$ est une valeur d'intensité des données d'image plus nettes, g est le facteur de gain et f est une valeur d'intensité des données d'image.

3. Procédé selon la revendication 1 ou la revendication 2, dans lequel le processus de calcul d'un facteur de gain (S2-55) comprend, pour chacune d'une pluralité de positions de pixel dans les données d'image :

la lecture d'une valeur stockée d'une table de recherche en fonction de la taille du filtre appliqué aux données d'image intégrées pour cette position de pixel et l'intensité des données d'image pour cette position de pixel (S2-50) ; et
le calcul du facteur de gain en fonction de la valeur lue depuis la table de recherche et les données d'image lissées générées pour cette position de pixel.

4. Procédé selon l'une quelconque des revendications précédentes, dans lequel :

les données d'image intégrées sont accumulées dans une mémoire pour les pixels sur une pluralité de lignes de l'image, où le nombre de lignes dépend de la taille du filtre à appliquer (S2-25, S2-30) ; et
les processus d'application du filtre (S2-45), calcul du facteur de gain (S2-55) et modulation des données d'image (S2-60) sont conduits pour les pixels sur une ligne stockée avant que les données d'image intégrées pour les pixels sur une autre ligne de l'image soient stockées dans la mémoire et les processus sont répétés pour les pixels sur la ligne stockée suivante.

5. Procédé selon l'une quelconque des revendications précédentes, dans lequel les données d'image à rendre plus nettes sont stockées dans une mémoire et remplacées dans la mémoire par les données d'image plus nettes au fur et à mesure que des données d'image plus nettes sont générées.

6. Procédé selon l'une quelconque des revendications précédentes, dans lequel :

les données d'image à rendre plus nettes comprennent des données de couleur dans une pluralité de canaux ;
les données de couleur sont traitées pour générer des données d'intensité (S2-10) ;
les données d'intensité générées sont traitées pour générer les données d'image intégrées (S2-25) ; et
les données de couleur dans la pluralité de canaux sont modulées en fonction du facteur de gain calculé pour générer les données d'image plus nettes (S2-60).

7. Appareil pour traiter des données d'image pour générer des données d'image plus nettes, l'appareil comprenant :

des moyens (28) pour traiter des données d'image pour générer des données d'image intégrées selon l'équation :

$$I(x,y) = f(x, y) + I(x-1, y) + I(x, y-1) - I(x-1, y-1)$$

où I est la valeur des données d'image intégrées, *x, y* sont des coordonnées de pixel, et *f* est une valeur d'intensité ;
des moyens (30) pour appliquer un filtre aux données d'image intégrées pour générer des données d'image lissées, où les moyens (30) pour appliquer un filtre aux données d'image intégrées sont configurés pour appliquer le filtre, pour chacune d'une pluralité de positions de pixel dans les données d'image, par
sélection d'une taille du filtre à appliquer en fonction d'une mesure du flou d'une image pour cette position de pixel ; et
application du filtre de la taille sélectionnée aux données d'image intégrées pour générer des données d'image lissées ;
des moyens (32) pour calculer un facteur de gain en fonction des données d'image lissées ; et
des moyens (34) pour moduler les données d'image en fonction du facteur de gain calculé pour générer des données d'image plus nettes ;
où :
les moyens (30) pour appliquer un filtre aux données d'image intégrées sont configurés pour appliquer le filtre aux données d'image intégrées pour générer des données d'image lissées selon l'équation :

$$f_{BF}(x, y, r) = I(x + r, y+r) - I(x-r-1, y+r) - I(x + r, y-r-1) + I(x-r-1, y-r-1)$$

où r est la taille de filtre pour le pixel et $f_{BF}$ est la valeur des données d'image lissées.

8. Appareil selon la revendication 7, dans lequel les moyens (34) pour moduler les données d'image pour générer des données d'image plus nettes sont configurés pour moduler les données d'image selon l'équation :

$$f_s(x, y) - g(x, y) \ f(x, y)$$

où $x$, $y$ sont des coordonnées de pixel, $f_s$ est une valeur d'intensité des données d'image plus nettes, g est le facteur de gain et $f$ est une valeur d'intensité des données d'image.

9. Appareil selon la revendication 7 ou la revendication 8, dans lequel les moyens (32) pour calculer un facteur de gain sont configurés pour calculer un facteur de gain respectif pour chacune d'une pluralité de positions de pixel dans les données d'image par :

lecture d'une valeur stockée d'une table de recherche (18) en fonction de la taille du filtre appliqué aux données d'image intégrées pour cette position de pixel et l'intensité des données d'image pour cette position de pixel ; et calcul du facteur de gain en fonction de la valeur lue depuis la table de recherche (18) et les données d'image lissées générées pour cette position de pixel.

10. Appareil selon l'une quelconque des revendications 7 à 9, dans lequel l'appareil est configuré pour :

accumuler les données d'image intégrées dans une mémoire (20) pour les pixels sur une pluralité de lignes de l'image, où le nombre de lignes dépend de la taille du filtre à appliquer ; et appliquer le filtre, calculer le facteur de gain et moduler les données d'image pour les pixels sur une ligne stockée avant le stockage des données d'image intégrées pour des pixels sur une autre ligne de l'image dans la mémoire et répéter les processus pour les pixels sur la ligne stockée suivante.

11. Appareil selon l'une quelconque des revendications 7 à 10, dans lequel l'appareil est configuré pour stocker les données d'image à rendre plus nettes dans une mémoire (10) et remplacer les données d'image stockées dans la mémoire (10) par les données d'image plus nettes au fur et à mesure que les données d'image plus nettes sont générées.

12. Appareil selon l'une quelconque des revendications 7 à 11, dans lequel :

les données d'image à rendre plus nettes comprennent des données de couleur dans une pluralité de canaux ; l'appareil comprend en outre des moyens (24) pour traiter des données d'image en couleur dans une pluralité de canaux pour générer des données d'intensité à partir des données d'image en couleur ; les moyens (28) pour traiter des données d'image pour générer des données d'image intégrées sont opérationnels pour traiter les données d'intensité pour générer les données d'image intégrées ; et les moyens (34) pour moduler les données d'image sont opérationnels pour moduler les données de couleur dans la pluralité de canaux en fonction du facteur de gain calculé pour générer les données d'image plus nettes.

13. Produit de programme informatique exécutant des instructions de programme informatique pour programmer un appareil de traitement programmable de manière à devenir opérationnel pour exécuter un procédé selon au moins une des revendications 1 à 6.

Local blur estimates | R, G, B pixel data

12 ---- Local Blur Estimate Storage

RGB Data Storage ---- 10

14 --- Image Scan Controller

16 --- Variable Aperture Controller

18 --- Pre-Computed Look-Up Tables

20 --- Image Data Processing Buffer

Image Sharpener --- 22

Intensity Calculator --- 24

Image Expander --- 26

Integral Image Calculator --- 28

Variable Aperture Filter --- 30

Gain Factor Calculator --- 32

Output Colour Channel Calculator --- 34

36 ---- Output Image Data Interface

Sharpened R, G, B pixel data

# Fig.1

**Fig.2**

Input image       Sliding buffer for integral image       Output image

Replicated pixel areas

# Fig. 3

## REFERENCES CITED IN THE DESCRIPTION

**Patent documents cited in the description**

- US 5363209 A
- US 20040047514 A1
- EP 2124429 A

**Non-patent literature cited in the description**

- Nonlinear Unsharp masking for the enhancement of Document Images. *Proceedings of the Eighth European Signal Processing Conference, EUSIPCO-96,* 1996
- **Narendra P M et al.** Real-time adaptive contrast enhancement. *IEEE Transactions on Pattern Analysis and Machine Intelligence USA,* November 1981, vol. PAMI-3 (6), ISSN 0162-8828, 655-661
- Fast Feature Extraction Using Approximations to Derivatives with Summed-Area Images. **Paul Wyatt et al.** Computer Vision - ACCV 2006 Lecture Notes in Computer Science; LNCS. Springer-Verlag, 01 January 2005, vol. 3851, 776-786
- Speeded-Up Robust Features (SURF). **BAY H et al.** COMPUTER VISION AND IMAGE UNDERSTANDING. ACADEMIC PRESS, 15 December 2007, vol. 110, 346-359